# EUROPÄISCHE PATENTANMELDUNG

(11) **EP 0 940 279 A2**
(43) Veröffentlichungstag der Anmeldung: **08.09.1999**
(21) Anmeldenummer: 99102208.8
(22) Anmeldetag: 04.02.1999
(51) Int. Cl.: B60J 7/00

(54) **Sonnenschutz für ein Schiebedach eines Kraftfahrzeugs und Innenhimmel eines Kraftfahrzeugs**

(30) Priorität: 02.03.1998 DE 19808678
(71) Anmelder: Marowsky, Ruthard, Dipl.-Ing., 42659 Solingen (DE)
(72) Erfinder: Marowsky, Ruthard, Dipl.-Ing., 42659 Solingen (DE)
(74) Vertreter: Patentanwälte Gesthuysen, von Rohr, Weidener, Häckel

(57) **Zusammenfassung**

Die Erfindung betrifft einen Sonnenschutz (1) für ein Schiebedach eines Kraftfahrzeugs, mit einem Trägerteil (2). Die Erfindung betrifft weiterhin einen Innenhimmel eines Kraftfahrzeugs, ebenfalls mit einem Trägerteil. Zur preisgünstigen Herstellung eines Sonnenschutzes (1) einerseits und eines Innenhimmels andererseits und um den Anforderungen der Automobilindustrie gerecht zu werden, ist erfindungsgemäß vorgesehen, daß das Trägerteil (2) einen mit einem Gas gefüllten, gasdicht verschlossenen Hohlkörper (3) aus einem flexiblen Material aufweist.

## Beschreibung

Die Erfindung betrifft einen Sonnenschutz für ein Schiebedach eines Kraftfahrzeuges, mit einem Trägerteil. Des weiteren betrifft die vorliegende Erfindung einen Innenhimmel eines Kraftfahrzeugs, ebenfalls mit einem Trägerteil.

Schiebedächer aus Stahl oder Glas für Kraftfahrzeuge haben auf der dem Kraftfahrzeuginnenraum zugewandten Seite einen parallel zum Autodach verschiebbaren Sonnenschutz, der die Insassen vor zu starker Sonneneinstrahlung durch das geöffnete Stahlschiebedach oder durch das geöffnete oder geschlossene Glasdach schützen soll.

Die derzeit bekannten Sonnenschutze weisen jeweils ein Trägerteil auf, das aus verschiedenen Materialien bestehen kann. Bekannt sind Trägerteile aus glasfaserverstärktem Polyesterkunststoff, der üblicherweise als SMC-Kunststoff bezeichnet wird. Problematisch bei dem SMC-Kunststoff ist, daß dieser nicht mit vertretbarem Aufwand recycelt bzw. entsorgt werden kann. Weiterhin verändern sich in Abhängigkeit von der jeweiligen Temperatur die Maße eines derartigen Trägerteils sehr stark. Statt eines SMC-Trägerteils werden auch Trägerteile aus Stahl oder Aluminium, die ein- oder mehrschalig sein können, mit Harz verpreßte Naturfasern oder mit Harz beschichtete mehrlagige Wellpappenlagen verwendet.

Auf ein Trägerteil der vorgenannten Art aufgeklebt ist in der Regel ein Polyestervelour, ein Filz oder ein Vlies, meistens mit einem rückseitig aufgeflammten Polyurethanschaumrücken. An den seitlichen Rändern des Trägerteils befinden sich üblicherweise vier Federgleitclipse als Führungsorgane, um Maßungleichheiten sowie thermisch bedingte Maßänderungen auszugleichen, die Arretierung in jeder gewünschten Stellung zu garantieren und um Klappergeräusche zu vermeiden.

Weiterhin sind am Trägerteil Vorder- und Hinteranschläge als Wegbegrenzungen, z.B. in Form von aufzuklebenden oder einzuklinkenden Gummipuffern, vorgesehen. Im übrigen werden in der Regel diverse aufzuklebende Filzstreifen zur Vermeidung von Geräuschen jeglicher Art verwendet. Außerdem sind aufzuschraubende oder über Nieten verschweißbare oder einklinkbare Griffleisten vorgesehen, worüber der Sonnenschutz von Hand nach vorn oder hinten bewegbar ist, mit einem über die volle Breite laufenden Lüftungsschlitz.

Da die bekannten Sonnenschutze aus einer Vielzahl von Bauteilen bestehen, um eine einwandfreie Funktion zu gewährleisten, sind sie vergleichsweise aufwendig herzustellen und dementsprechend teuer.

Statt der durch Verklebung assemblierten vorgenannten Konstruktionen werden Sonnenschutze derzeit noch in kleineren, aber ständig steigenden Mengen durch Hinterschäumen hergestellt. Auf die vorgenannte Art und Weise werden in der Regel die Innenhimmel von Kraftfahrzeugen hergestellt. Dabei wird ein Velour-Dekorstoff in eine Form gelegt, in die dann Polyurethan eingeschäumt wird. Diese Ausführung ist preiswert, zeigt aber oft Mängel an Thermostabilität bei Klimaänderungen. Außerdem ist häufig ein zusätzliches Einlegen von Stahlverstärkungen in die Schaumform vor dem Schäumen erforderlich. Ein weiterer Nachteil von derart hergestellten Sonnenschutzen bzw. Innenhimmeln besteht auch darin, daß Polyurethanschäume in geschlossenen Systemen unter hohem Einsatz von Isocyanaten hergestellt werden und unter wachsender Kritik unter Umweltschutzgesichtspunkten stehen.

Aufgabe der vorliegenden Erfindung ist es, einen Sonnenschutz bzw. einen Innenhimmel der eingangs genannten Art zur Verfügung zu stellen, der jeweils einfach und kostengünstig herstellbar ist und den von der Automobilindustrie gestellten Anforderungen gerecht wird.

Die zuvor hergeleitete und genannte Aufgabe ist bei einem Sonnenschutz der eingangs genannten Art bzw. einem Innenhimmel der zuvor genannten Art erfindungsgemäß dadurch gelöst, daß das Trägerteil einen mit einem Gas gefüllten, gasdicht verschlossenen Hohlkörper aus einem flexiblen Material aufweist.

Durch die Erfindung ergeben sich einen Vielzahl von Vorteilen. Ein erfindungsgemäßer Sonnenschutz bzw. Innenhimmel läßt sich vergleichsweise preiswert herstellen. Sonnenschutz wie Innenhimmel sind weiterhin jeweils sehr leicht, was sich günstig auf das Fahrzeuggewicht auswirkt und können im übrigen sehr dünn hergestellt werden, was sich vorteilhaft auf die Kopffreiheit im Fahrzeug auswirkt. Außerdem ist ein Sonnenschutz bzw. ein Innenhimmel gemäß der Erfindung maßstabil, sowie verschleiß- und klapperfrei. Da der erfindungsgemäße Sonnenschutz ohne weiteres direkt, also ohne Gleitfederclipse, in entsprechende Führungsschienen in der festen Dachkonstruktionen des Fahrzeugs in entsprechende Führungsschienen der festen Dachkonstruktion eingesetzt werden kann und dort bei entsprechender Ausbildung reibschlüssig an den Führungsschienen anliegt, läßt sich eine entsprechende Fixierung in jeder Öffnungsstellung des Sonnenschutzes realisieren. Ein weiterer wichtiger Vorteil der Erfindung besteht darin, daß der erfindungsgemäße Sonnenschutz bzw. Innenhimmel im Falle eines Unfalls völlig gefahrenfrei ist. Bei entsprechender Materialwahl ist der Hohlkörper außerdem auch ohne weiteres recycelbar. Schließlich entstehen bei der Herstellung des erfindungsgemäßen Sonnenschutzes bzw. Innenhimmels keine belästigenden Emissionen.

Um eine dauerhafte Formstabilität zu erhalten, besteht der Hohlkörper aus einem gasdichten Material, insbesondere aus einem gasdichten Kunststoff, so daß nach dem Verschließen des Hohlkörpers bei der Herstellung das Gas anschließend nicht mehr entweichen kann.

Damit es nach dem Befüllen nicht zu einem unerwünschten, zu starken "Ausbeulen" des Hohlkörpers kommt, ist zur Formstabilisierung vorgesehen, daß die dem Kraftfahrzeuginnenraum zugewandte innere Wandung und die gegenüberliegende äußere Wandung des Hohlkörpers über Verbindungen miteinander verbunden sind. Bei diesen Verbindungen kann es sich um Stege handeln. Auch ist es möglich, daß die einander zugewandten Flächen der Wandungen im Hohlkörper unmittelbar miteinander verbunden sind, beispielsweise verschweißt, und zwar punktartig oder über sich linienförmig erstreckende Verbindungen.

Zur Erzielung einer hohen Stabilität können dabei eine Mehrzahl von Verbindungen, insbesondere linienartiger Verbindungen vorgesehen sein, die vorzugsweise längs und quer und dabei jeweils im wesentlichen parallel zueinander verlaufen können.

Des weiteren ist es grundsätzlich möglich, daß im Hohlkörper nur eine mit Gas gefüllte Kammer vorgesehen ist. Zweckmäßig kann es aber auch sein, eine Mehrzahl voneinander separater, jeweils mit Gas gefüllter Kammern vorzusehen, so daß bei einer Beschädigung einer Kammer nicht notwendigerweise die Formstabilität des Sonnenschutzes bzw. Innenhimmels vollständig verlorengehen muß.

Des weiteren bietet es sich aus Verstärkungsgründen an, zumindest an einer Wandung, und zwar insbesondere an der dem Kraftfahrzeuginnenraum abgewandten äußeren Wandung des Hohlkörpers rippenartige Verstärkungen vorzusehen, die vorzugsweise auf der gesamten Oberseite der äußeren Wandung vorgesehen sein können.

Der erfindungsgemäße Sonnenschutz bzw. Innenhimmel hat zumindest auf der dem Kraftfahrzeuginnenraum zugewandten Innenseite des Trägerteils eine Kaschierung. Bei der Kaschierung kann es sich um Velour, Filz oder Vlies oder auch um eine Beflockung handeln. Da der Sonnenschutz in seitlichen Führungen am Dach des Kraftfahrzeugs geführt und aufgrund seiner federnden Eigenschaften in die Führungen gepreßt und dort reibschlüssig gehalten wird, kann es dort zum Verschleiß am Material des Hohlkörpers kommen. Um etwaige Beschädigungen an den seitlichen Rändern des Hohlkörpers auszuschließen, ist vorgesehen, daß die Kaschierung zumindest auch am seitlichen Rand des Trägerteils, wo dieses in Kontakt mit den seitlichen Führungen steht, vorgesehen ist.

An den seitlichen Rändern des Trägerteils außenseitig, innenseitig und/oder stirnseitig können im übrigen auch streifenförmige Gleitelemente am Sonnenschutz zur Anlage in den Führungen vorgesehen sein, die auf das Trägerteil aufgebracht sind.

Auch kann vorgesehen sein, daß sich auf der Oberseite und/oder der Unterseite des Hohlkörpers eine Schutz-/Verstärkungsschicht befindet. Eine derartige Schicht kann grundsätzlich aus jedem Material bestehen und soll einerseits zur Verstärkung und andererseits zum Schutz vor Beschädigungen des Hohlkörpers dienen.

Während beim Stand der Technik üblicherweise eine in das in der Regel aus einem starren Material bestehende Trägerteil einsetzbare Leiste mit Lüftungsöffnungen verwendet wird, sind bei der Erfindung diese Öffnungen unmittelbar im Trägerteil vorgesehen. Dies läßt sich durch entsprechende Ausgestaltung des Hohlkörpers ohne weiteres realisieren.

Wie beim Stand der Technik so weist auch das erfindungsgemäße Trägerteil am Sonnenschutz einen Griff auf. Dieser Griff kann Teil eines Hohlkörpers sein oder aber als nachträglich am Trägerteil zu befestigendes Bauteil ausgebildet sein.

Weitere Merkmale, Vorteile und Anwendungsmöglichkeiten der Erfindung ergeben sich aus der nachfolgenden Beschreibung von Ausführungsbeispielen anhand der Zeichnung.

Es zeigt
- Fig. 1: eine Draufsicht auf einen erfindungsgemäßen Sonnenschutz,
- Fig. 2: eine perspektivische Schnittansicht eines Teils eines erfindungsgemäßen Sonnenschutzes und
- Fig. 3: eine perspektivische Ansicht eines Teils einer anderen Ausführungsform eines erfindungsgemäßen Sonnenschutzes.

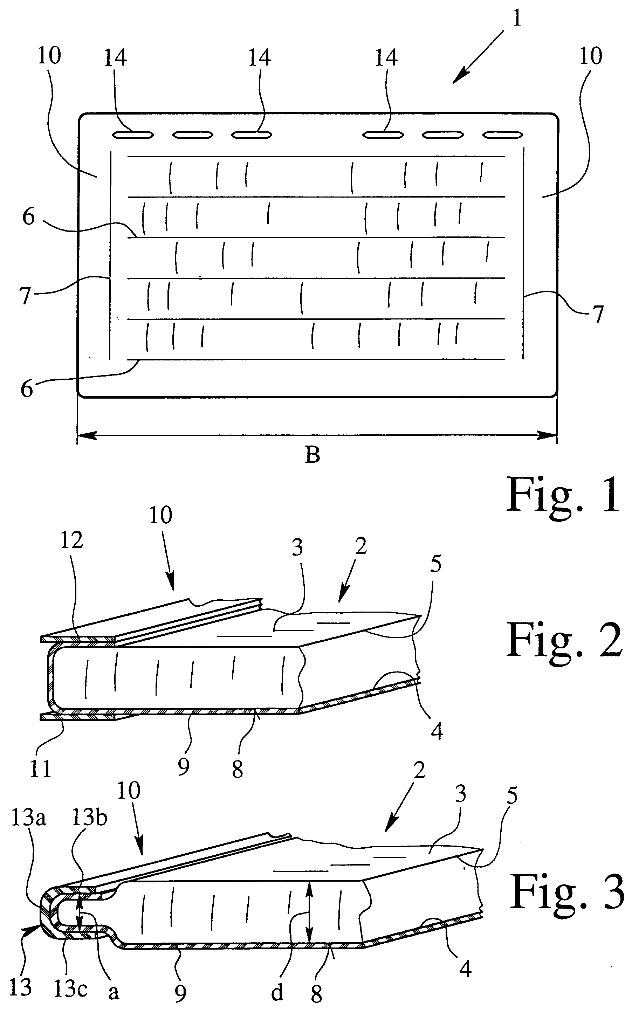

In Fig. 1 ist eine Ausführungsform eines Sonnenschutzes 1 eines nicht näher dargestellten Schiebedachs eines ebenfalls nicht dargestellten Kraftfahrzeugs gezeigt. Der Sonnenschutz 1 weist ein Trägerteil 2 auf.

Wesentlich ist nun, daß das Trägerteil 2 einen mit einem Gas gefüllten, gasdicht verschlossenen Hohlkörper 3 aus einem flexiblen Material aufweist. Bei dem Gas kann es sich ohne weiteres um Luft handeln, während es sich bei dem flexiblen Material vorzugsweise um einen gasdichten Kunststoff handelt. Der Hohlkörper 3 weist eine dem Kraftfahrzeuginnenraum zugewandte innere Wandung 4 und eine gegenüberliegende äußere Wandung 5 auf. Zur Erzielung einer für den gewünschten Einsatzzweck hinreichenden Formstabilität des Hohlkörpers 3 im mit Luft gefüllten Zustand sind die Wandungen 4, 5 über in Fig. 1 lediglich in Draufsicht dargestellte Verbindungen 6, 7, wobei es sich vorliegend um Verschweißungen handelt, miteinander verbunden.

Im dargestellten Ausführungsbeispiel erstrecken sich die Verbindungen 6, 7 linienförmig. Dabei sind eine Mehrzahl von querverlaufenden Verbindungen 6 und zwei längsverlaufenden Verbindungen 7 vorgesehen. Die jeweiligen Verbindungen 6 bzw. 7 verlaufen jeweils parallel zueinander. Im übrigen sind die Verbindungen 6,7 derart ausgebildet, daß bei der dargestellten Ausführungsform im Hohlkörper nur eine einzige mit Gas gefüllte Kammer existiert. Es versteht sich, daß statt der dargestellten Verbindungen auch andersartige Verbindungen, beispielsweise punktförmig ausgebildete, vorgesehen sein können.

Im dargestellten Ausführungsbeispiel ist auf der dem Kraftfahrzeuginnenraum zugewandten Seite 8 der äußeren Wandung 4 vorliegend eine Kaschierung 9 vorgesehen. Bei der Kaschierung 9 handelt es sich bei diesem Ausführungsbeispiel um einen Velour-Dekorstoff. Bei den beiden in den Fig. 2 und 3 dargestellten Ausführungsformen ist die Kaschierung bis auf die äußere Wandung 5 umgeschlagen. Die Kaschierung 9 bedeckt damit den seitlichen Rand 10 des Sonnenschutzes 1.

Es ist darauf hinzuweisen, daß es bei der in Fig. 2 dargestellten Ausführungsform grundsätzlich ausreichend ist, wenn die Kaschierung lediglich auf der äußeren Seite 8 der inneren Wandung 4 vorgesehen ist, sich also nicht bis auf die äußere Wandung 5 erstreckt.

Bei der in Fig. 2 dargestellten Ausführvngsform ist an den seitlichen Rändern 10 des Trägerteils 2 auf der äußeren Wandung 4 und der inneren Wandung 5 jeweils ein streifenförmiges Gleitelement 11, 12 vorgesehen. Die Gleitelemente 11, 12 dienen zur Anlage in an der Dachkonstruktion angebrachten Führungsschienen 13 (vgl. Fig. 3), um einen reibungsbedingten Abrieb des Materials des Hohlkörpers 3 beim Betätigen des Sonnenschutzes 2 durch Verschieben in den Führungsschienen 13 zu verhindern. Die Gleitelemente 11, 12 stehen mit ihren seitlichen Rändern über den Hohlkörper 3 soweit über, daß die Ränder am unteren mittigen Schenkel 13a der Führungsschiene 13 im eingesetzten Zustand anschlagen, ohne daß die seitliche Stirnfläche des Hohlkörpers dort anschlägt.

Wie sich insbesondere aus Fig. 3 ergibt, greift das Trägerteil 2 unmittelbar in die Führungsschiene 13 ein, ohne daß seitlich befestigte, separate Federmittel o.dgl. erforderlich sind. Im übrigen ist die Breite B des Trägerteils 2 größer als der Abstand der beiden Führungsschienen 13 zueinander, so daß aufgrund der Eigenelastizität das Trägerteil 2 gegen den unteren mittigen Schenkel 13a der jeweiligen Führungsschienen 13 drückt. Im übrigen ist aber auch die Dicke d des Trägerteils 2, die zwischen ein und zwei Zentimetern betragen kann, größer als der Abstand der beiden seitlichen Schenkel 13b, 13c der Führungsschienen 13, so daß sich auch in dieser Richtung eine entsprechende Reibkraft ergibt.

Im Trägerteil 2 sind eine Mehrzahl von Durchgangsöffnungen 14 vorgesehen, die sich über einen wesentlichen Teil der Breite B des Trägerteils 2 erstrecken. Zwischen den beiden mittleren Durchgangsöffnungen 14 ist ein vergleichsweise großer Freiraum vorgesehen, der zur Anbringung eines hier nicht dargestellten Griffs dient.

## Patentansprüche

1. Sonnenschutz (1) für ein Schiebedach eines Kraftfahrzeugs, mit einem Trägerteil (2) **dadurch gekennzeichnet,** daß das Trägerteil (2) einen mit einem Gas gefüllten, gasdicht verschlossenen Hohlkörper (3) aus einem flexiblen Material aufweist.

2. Innenhimmel eines Kraftfahrzeugs, mit einem Trägerteil, **dadurch gekennzeichnet,** daß das Trägerteil einen mit einem Gas gefüllten, gasdicht verschlossenen Hohlkörper aus einem flexiblen Material aufweist.

3. Sonnenschutz nach Anspruch 1 bzw. Innenhimmel nach Anspruch 2, dadurch gekennzeichnet, daß der Hohlkörper (3) aus einem gasdichten Material, insbesondere einem gasdichten Kunststoff besteht.

4. Sonnenschutz bzw. Innenhimmel jeweils nach einem der vorhergehenden Ansprüche, dadurch gekennzeichnet, daß der Hohlkörper (3) eine dem Kraftfahrzeuginnenraum zugewandte innere Wandung (4) und eine gegenüberliegende äußere Wandung (5) aufweist und daß beide Wandungen (4, 5) über die einander zugewandten Flächen der Wandungen (4, 5) verteilt über Verbindungen (6, 7) miteinander verbunden sind.

5. Sonnenschutz bzw. Innenhimmel jeweils nach einem der vorhergehenden Ansprüche, dadurch gekennzeichnet, daß die Verbindungen (6, 7) als Stege ausgebildet sind oder daß die einander zugewandten Flächen der Wandungen (4, 5) unmittelbar miteinander verbunden sind.

6. Sonnenschutz bzw. Innenhimmel jeweils nach einem der vorhergehenden Ansprüche, dadurch gekennzeichnet, daß die Verbindungen (6, 7) punktartig oder sich linienförmig erstreckend ausgebildet sind.

7. Sonnenschutz bzw. Innenhimmel jeweils nach einem der vorhergehenden Ansprüche, dadurch gekennzeichnet, daß im Hohlkörper (3) nur eine mit Gas gefüllte Kammer vorgesehen ist oder eine Mehrzahl voneinander separater, jeweils mit Gas gefüllter Kammern vorgesehen sind.

8. Sonnenschutz bzw. Innenhimmel jeweils nach einem der vorhergehenden Ansprüche, dadurch gekennzeichnet, daß zumindest an einer Wandung rippenartige Verstärkungen vorgesehen sind.

9. Sonnenschutz bzw. Innenhimmel jeweils nach einem der vorhergehenden Ansprüche, dadurch gekennzeichnet, daß zumindest auf der dem Kraftfahrzeuginnenraum zugewandten Seite des Trägerteils (2) eine Kaschierung (9) aufgebracht ist und daß, vorzugsweise, die Kaschierung (9) zumindest auch am seitlichen Rand (10) auf der äußeren Wandung (5) des Trägerteils (2) vorgesehen ist.

10. Sonnenschutz bzw. Innenhimmel jeweils nach einem der vorhergehenden Ansprüche, dadurch gekennzeichnet, daß auf der äußere Wandung (4) und/oder der inneren Wandung (5) des Hohlkörpers (3) eine Schutz-/Verstärkungsschicht vorgesehen ist.

11. Sonnenschutz nach einem der vorhergehenden Ansprüche, dadurch gekennzeichnet, daß an den seitlichen Rändern (10) des Trägerteils (2) auf der Innenseite, stirnseitig und/oder auf der Außenseite Gleitelemente (11, 12) in Verschiebungsrichtung des Sonnenschutzes (1) zur Anlage in Führungsschienen (13) für den Sonnenschutz (1) vorgesehen sind.

12. Sonnenschutz nach einem der vorhergehenden Ansprüche, dadurch gekennzeichnet, daß im Trägerteil (2) zumindest eine, vorzugsweise eine Mehrzahl von sich insbesondere über einen wesentlichen Teil der Breite des Trägerteils (2) erstreckende Durchgangsöffnungen (14) vorgesehen sind.

13. Sonnenschutz nach einem der vorhergehenden Ansprüche, dadurch gekennzeichnet, daß am Trägerteil (2) ein Griff vorgesehen ist und daß der Griff Teil des Hohlkörpers (3) ist oder auf der Unterseite des Trägerteils befestigt ist.

14. Schiebedach mit einem in seitlichen Führungsschienen (13) der Dachkonstruktion des Kraftfahrzeugs geführten Sonnenschutz (1) nach einem der vorhergehenden Ansprüche, wobei der Trägerteil (2) unmittelbar, also ohne am Trägerteil (2) seitlich befestigte separate Federmittel, in die Führungsschienen (13) eingreift.

15. Schiebedach nach Anspruch 14, dadurch gekennzeichnet, daß die Breite (B) des Trägerteils (2) größer ist als der Abstand der Führungsschienen (13) und/oder daß die Dicke (d) des Trägerteils (2) größer ist als der Abstand von seitlichen Schenkeln (13b, 13c) der Führungsschiene (13).
